# EUROPEAN PATENT APPLICATION

(11) **EP 3 470 013 A1**
(43) Date of publication of application: **17.04.2019**
(21) Application number: 17916368.8
(22) Date of filing: 30.06.2017
(51) Int. Cl.: A61C 13/225, A61C 13/113

(54) **CONNECTED ARTIFICIAL TEETH**

(71) Applicant: GC Corporation, Sunto-gun, Shizuoka 410-1307 (JP)
(72) Inventor: SATO, Fumiya, Tokyo 174-8585 (JP)
(74) Representative: Müller-Boré & Partner Patentanwälte PartG mbB
(86) International application number: PCT/JP2017/024101
(87) International publication number: WO 2019/003409

(57) **Abstract**

To provide a more convenient row of connected artificial teeth which is used for implantation, in this row of connected artificial teeth, a plurality of artificial teeth (11) that are formed of resin are integrally connected, an occlusal face (11a) is formed over one face of each of the artificial teeth, and a hole (12) is provided for at least one of the artificial teeth on an opposite side of the occlusal face, into the hole a coupling member with an artificial tooth root being to be inserted.

## Description

### Technical Field

The present invention relates to a row of connected artificial teeth which is formed by connecting a plurality of artificial teeth, and is used for implantation.

### Background Art

For people who use a denture, a denture functions as part of their bodies, and is essential for their daily living. An upper structure of a denture or the like functions in an oral cavity every day, and thus, is soon worn. It is necessary to carry out maintenance at regular intervals, and replace an upper structure with a new one.

Patent Literature 1 discloses the invention relating to coupled teeth of a provisional restoration and a final restoration for a denture and an implant. They are formed by connecting a plurality of artificial teeth by means of coupling members, so that a plurality of the artificial teeth can be arranged together at once when the artificial teeth are fixed to a denture base.

### Citation List

### Patent Literature

Patent Literature 1: JP H6-261917A

### Summary of Invention

### Technical Problem

So-called implant treatment is to embed an artificial tooth root (implant) in a jawbone, attach an abutment that functions as a coupling member to an end part of the artificial tooth root which is arranged on an intraoral side, and attach an artificial tooth to the abutment. A more convenient artificial tooth to be used for such implant treatment is demanded as well. However, conventional arts have not studied implantation in such a view.

An object of the present invention is to provide a more convenient row of connected artificial teeth to be used for implantation in view of the above described problem.

### Solution to Problem

The present invention will be described below. Here, reference numerals in the drawings are provided in parentheses for easy understanding. However, the present invention is not limited thereto.

One aspect of the present invention is a row of connected artificial teeth (10) wherein a plurality of artificial teeth (11) that are formed of resin are integrally connected, an occlusal face (11a) is formed over one face of each of the artificial teeth, and a hole (12) is provided for at least one of the artificial teeth on an opposite side of the occlusal face, into the hole a coupling member with an artificial tooth root being to be inserted. Here, examples of "coupling member with an artificial tooth root" include an abutment, and a cylinder which are coupled to the artificial tooth root.

The hole (12) of the row of connected artificial teeth (10) can be provided for each of all the artificial teeth (11).

The artificial teeth (11) are formed of resin material, and may be formed of a resin of poly(methyl methacrylate).

### Advantageous Effects of Invention

According to the present invention, a plurality of artificial teeth that are to be attached to an implant can be handled together at once, which is more convenient. In addition, processing resin material using CAD/CAM makes it possible to use the row of connected artificial teeth as a denture or an implant prosthesis for every cases.

### Brief Description of Drawings

Fig. 1 is a perspective view of a row of connected artificial teeth 10.
Fig. 2 shows the row of connected artificial teeth 10 seen from an occlusal faces 11a side.
Fig. 3 shows the row of connected artificial teeth 10 seen from a side where holes 12 are provided.

### Description of Embodiments

The present invention will be described below based on the embodiment shown in the drawings. The present invention is not restricted to this embodiment.

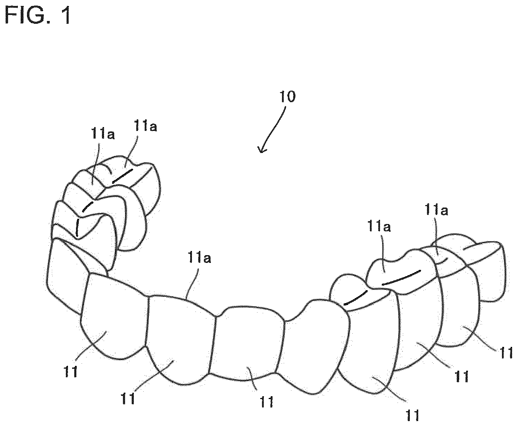

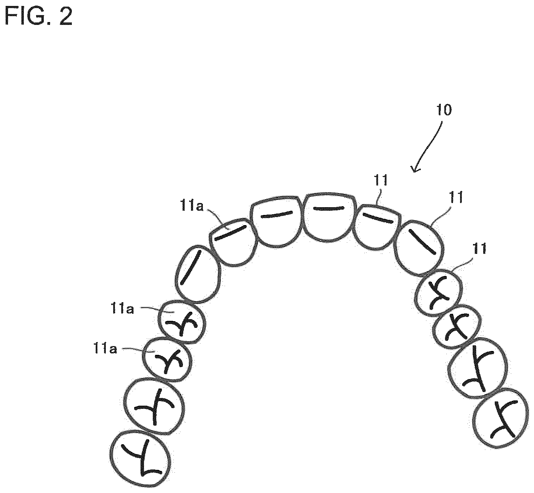

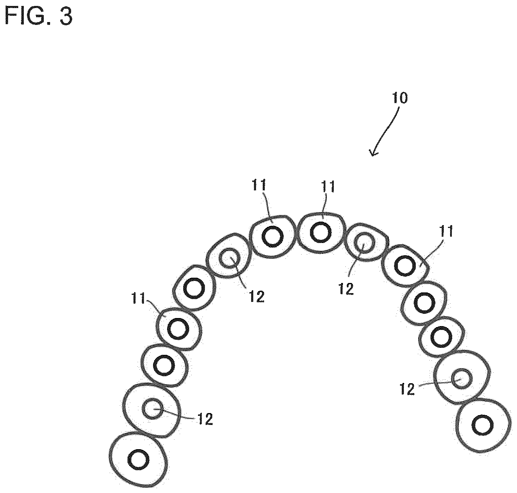

Fig. 1 is a perspective view of a row of connected artificial teeth 10 according to one embodiment. Fig. 2 is a plan view of the row of connected artificial teeth 10, seen from an occlusal faces side. Fig. 3 is a back view of the row of connected artificial teeth 10, seen from a holes 12 side.

As can be seen from Figs. 1 to 3, the row of connected artificial teeth 10 is formed by integrally connecting a plurality of artificial teeth 11. Each artificial tooth 11 has an occlusal face 11a that imitates an occlusal face of a natural tooth, and has unevenness so as to function similarly as an occlusal face of a natural tooth. In contrast, a hole 12 to be coupled with an abutment or a cylinder which is a coupling member with an artificial tooth root (implant) is provided for the opposite face of the occlusal face 11a.

The hole 12 is preferably provided for every artificial tooth 11, which can lead to flexible response to a position where an artificial tooth root is arranged. Without being limited to this, the hole 12 has only to be provided for at least one artificial tooth 11 as long as the row of connected artificial teeth 10 can be properly held in an oral cavity. Therefore, the hole 12 is formed in one or each of a plurality of the artificial teeth 11 as needed.

Here, the row of connected artificial teeth 10 is made up of the artificial teeth 11, and do not have a portion imitating a gum. Therefore, the row of connected artificial teeth 10 is easily made.

According to the row of connected artificial teeth 10 as described above, the artificial teeth 11 can be attached to an artificial tooth root together at once, which is more convenient.

Resin material that forms the row of connected artificial teeth 10 is not specifically limited. Examples thereof include a resin of poly(methyl methacrylate) (PMMA). Using PMMA makes it possible to improve stability in an oral cavity more.

The number of the artificial teeth 11 included in the row of connected artificial teeth 10 is not limited as long as no less than 2. The row of connected artificial teeth 10 may include all teeth as this embodiment, or may include some teeth.

For example, the row of connected artificial teeth 10 as described above can be made as follows. An example of using CAD/CAM will be described below as one example of a method for making the row of connected artificial teeth 10.

First, a form of an occlusal face of a denture that is presently used is measured with a coordinate measuring machine or an intraoral measuring machine in order to obtain a patient's present intraoral form, and a shape thereof is taken into a CAD system as data.

Drawing is carried out by CAD using the obtained data, and part whose data is lacked is compensated, to be retouched on the CAD system.

According to data of the shape of teeth which is obtained as described above, a machine tool is controlled, to cut the row of connected artificial teeth 10 out of boardlike material such as PMMA by CAM.

Whereby, the row of connected artificial teeth 10 can be made.

The row of connected artificial teeth 10 as described above is attached in an oral cavity, to function as a denture or a bridge for an implant. That is, an abutment or a cylinder is attached to an end part on an intraoral side of an artificial tooth root (implant) that is embedded in an intraoral jawbone. This abutment or cylinder is inserted into the holes 12 of the row of connected artificial teeth 10, to fix the row of connected artificial teeth 10 in an oral cavity.

### Reference Signs List

10 row of connected artificial teeth
11 artificial tooth
11a occlusal face
12 hole

## Claims

1. A row of connected artificial teeth wherein
a plurality of artificial teeth that are formed of resin are integrally connected, an occlusal face is formed over one face of each of the artificial teeth, and a hole is provided for at least one of the artificial teeth on an opposite side of the occlusal face, into the hole a coupling member with an artificial tooth root being to be inserted.

2. The row of connected artificial teeth according to claim 1, wherein the hole is provided for each of all the artificial teeth.

3. The row of connected artificial teeth according to claim 1 or 2, wherein the artificial teeth are formed of a resin of poly(methyl methacrylate).
